# FASCICULE DE BREVET EUROPEEN

(11) **EP 0 776 393 B1**
(45) Date de publication et mention de la délivrance du brevet: **20.06.2007**
(21) Numéro de dépôt: 96920906.3
(22) Date de dépôt: 06.06.1996
(51) Int. Cl.: D06M 13/224

(54) **COMPOSITION D'ENSIMAGE POUR FILS COMPOSITES ET SON UTILISATION**
TEXTILÖL FÜR COMPOSITFASERN UND SEINE VERWENDUNG
SIZING COMPOSITION FOR COMPOSITE YARNS AND USE THEREOF

(30) Priorité: 09.06.1995 FR 9506829
(43) Date de publication de la demande: 04.06.1997
(73) Titulaire: VETROTEX FRANCE, 73000 Chambéry (FR)
(72) Inventeur: BOISSONNAT, Philippe, F-73230 Challes-les-Eaux (FR); LOUBINOUX, Dominique, F-38660 La Terrasse (FR)
(74) Mandataire: Goldenberg, Virginie Isabelle
(86) Numéro de dépôt international: PCT/FR1996/000851
(87) Numéro de publication internationale: WO 1996/041912

(56) Documents cités:
- WO-A-92/21809
- WO-A-94/05847
- US-A- 4 042 360
- US-A- 5 288 416

## Description

La présente invention concerne une composition d'ensimage pour fils composites et les fils composites revêtus de cette composition.

Les fils composites (encore appelés fils mixtes) sont des fils composés de filaments organiques et de filaments de verre et sont utilisés pour la réalisation de produits composites. Ces fils sont principalement obtenus par assemblage de filaments de verre et de filaments thermoplastiques directement sous filière de manière à obtenir un bon mélange (mélange « intime ») de filaments de verre et de filaments thermoplastiques. Les procédés d'obtention de fils composites directement sous filière sont notamment décrits dans les brevets EP-A-0 367 661 (US 5 011 523), EP-A-0 505 275 (US 5 328 493), EP-A-0 505 274 (US 5 316 561), WO 93/15893, EP-A-0 599 695 et EP-A-0 616 055. Avant assemblage des filaments de verre et des filaments thermoplastiques sous filière, les filaments de verre sont revêtus d'une composition d'ensimage destinée, notamment, à protéger les fils de l'abrasion. Cette composition d'ensimage est habituellement aqueuse (elle comprend généralement plus de 90 % en poids d'eau), les compositions aqueuses étant plus faciles à manipuler et convenant traditionnellement au revêtement des filaments de verre (ce type de composition ayant notamment un très fort pouvoir mouillant vis-à-vis des filaments de verre).

Les matières thermoplastiques présentent cependant peu ou pas d'affinité avec l'eau et leur caractère hydrophobe entraîne un phénomène de répulsion entre les filaments de verre ensimés et les filaments thermoplastiques. Ce phénomène s'accentue lors du séchage intervenant généralement sur les fils composites en cas d'utilisation d'une composition d'ensimage aqueuse (le séchage permettant notamment d'utiliser plus facilement les fils composites dans des procédés de transformation tels que les procédés d'extrusion). Les filaments de verre ont alors tendance à se regrouper au fur et à mesure de l'évaporation de l'eau, les filaments thermoplastiques étant rejetés à l'extérieur du fil composite. Au lieu d'obtenir le mélange intime de filaments de verre et de filaments thermoplastiques recherché au sein des fils composites, on observe alors une ségrégation des filaments thermoplastiques avec décohésion partielle ou totale du fil mixte, les filaments thermoplastiques se retrouvant notamment sans protection contre les risques d'abrasion ou les phénomènes d'électricité statique.

La ségrégation des filaments thermoplastiques et leur absence de protection contre l'abrasion posent notamment des problèmes lors de l'utilisation des fils composites dans des applications textiles, par exemple en tissage où les fils frottent sur des embarrages. Dans de tels cas, les fils composites revêtus d'ensimage aqueux ont tendance à casser et à perturber le fonctionnement des machines textiles. Le mauvais mélange entre les filaments de verre et les filaments thermoplastiques lié à la ségrégation résultant de l'utilisation d'une composition d'ensimage aqueuse traditionnelle s'observe, par ailleurs, au niveau des composites obtenus à partir des fils composites comprenant lesdits filaments de verre et lesdits filaments thermoplastiques, ces composites présentant un aspect de surface peu satisfaisant.

Le but de la présente invention est de remédier aux problèmes précédemment cités. Ce but est atteint en utilisant une composition d'ensimage appropriée pour revêtir les filaments de verre avant leur assemblage avec les filaments thermoplastiques, cette composition pour fil composite comprenant un mélange de base sous forme d'une solution aqueuse, d'une émulsion aqueuse ou d'une suspension aqueuse comprenant au moins 85% en poids d'eau et au moins un agent de couplage, et au moins un additif sous forme d'un ester d'acide gras.

Par **«** mélange de base » on entend, selon l'invention, toute composition d'ensimage aqueux habituellement utilisée pour le revêtement des filaments de verre sous filière, cette composition se présentant habituellement sous forme d'une solution aqueuse, d'une émulsion aqueuse ou d'une suspension aqueuse. Des exemples de « mélanges de base » seront donnés ultérieurement.

La présente invention concerne également les fils composites revêtus de la composition d'ensimage selon l'invention et obtenus directement sous filière, ces fils composites présentant des caractéristiques améliorées par rapport aux fils composites obtenus sous filière en utilisant des ensimages traditionnels.

La composition d'ensimage selon l'invention répond aux exigences des compositions d'ensimage devant revêtir des filaments de verre en cours d'étirage sous filière ; elle est homogène et stable, notamment sous filière, et résiste au cisaillement induit par le passage des filaments à grande vitesse. De plus, la composition selon l'invention mouille bien la surface des filaments de verre aux vitesses d'étirage élevées et permet une bonne lubrification des filaments de verre, les protégeant ainsi de l'abrasion.

La composition selon l'invention présente en outre un très bon pouvoir mouillant non seulement vis-à-vis des filaments de verre mais également vis-à-vis des filaments thermoplastiques. La composition d'ensimage déposée sur les filaments de verre peut alors migrer en partie sur les filaments thermoplastiques après contact des deux types de filaments. Une répartition homogène de l'ensimage s'opère ainsi sur l'ensemble du fil composite obtenu, les filaments de verre et les filaments thermoplastiques étant parfaitement mouillés par la composition.

Au sein des fils composites revêtus de la composition selon l'invention, les filaments thermoplastiques sont lubrifiés, protégés de l'abrasion et montrent une faible aptitude à se charger d'électricité statique, comme les filaments de verre. On observe également au sein des fils composites un bon mélange des filaments de verre et des filaments thermoplastiques et un maintien desdits filaments entre eux.

Les avantages des fils composites revêtus de la composition selon l'invention sont multiples : de tels fils sont particulièrement aptes à être tissés sans risques de casses et l'imprégnation de tels fils par une matière organique est améliorée. Les composites obtenus à partir des fils composites, associés éventuellement à une matière organique supplémentaire, présentent un aspect de surface très satisfaisant, meilleur que celui des composites obtenus de la même façon mais en utilisant des fils composites revêtus d'ensimages traditionnels, les propriétés mécaniques des composites obtenus en utilisant les fils selon l'invention étant aussi bonnes que les propriétés mécaniques des composites obtenus en utilisant les fils composites traditionnels.

La composition selon l'invention peut comprendre, comme mélange de base, toute composition d'ensimage aqueuse traditionnelle, le choix du mélange de base étant opéré, de façon traditionnelle, par l'homme du métier parmi les compositions connues, en fonction notamment du type de filaments thermoplastiques associés aux filaments de verre, de la destination du fil composite revêtu de la composition et des matières organiques devant être associées avec ledit fil.

Le mélange de base de la composition selon l'invention comprend au moins 85 % et, de préférence, au moins 90 % en poids d'eau et comprend au moins un composé jouant un rôle d'agent de couplage. Selon un mode de réalisation de l'invention, le mélange de base comprend ainsi au moins un agent de couplage tel qu'un silane, un titanate, etc... permettant d'accrocher la composition d'ensimage sur le verre. Le mélange de base peut également comprendre d'autres agents de couplage permettant, après séchage des fils revêtus de la composition d'ensimage, d'améliorer la liaison verre-matière organique associée et notamment un ou des « co-agent(s) de couplage » jouant un rôle complémentaire de celui du ou des agents de couplage précités et permettant, par exemple, la création d'interactions entre le ou les agents de couplage et la matière organique associée. Notamment, dans le cas où les fils composites selon l'invention sont constitués de filaments de verre et de filaments thermoplastiques de type polyoléfine, et dans le cas où ils sont destinés à renforcer des matières polyoléfines, le mélange de base peut comprendre en émulsion une ou des polyoléfines de nature voisine de celle des polyoléfines constituant les filaments thermoplastiques et/ou la matière à renforcer, les polyoléfines de l'émulsion participant au couplage verre-matière à renforcer.

Le mélange de base de la composition selon l'invention peut également comprendre un ou des agents neutralisants et/ou stabilisants, ou tout autre type d'agent traditionnellement utilisé dans les compositions d'ensimage pour fils composites.

Selon des modes de réalisation avantageux de la présente invention, dans le cas où les fils composites selon l'invention comprennent des filaments polyoléfine (plus particulièrement polypropylène) et dans le cas où ils sont destinés à renforcer une matière polyoléfine (plus particulièrement polypropylène), le mélange de base de la composition selon l'invention revêtant lesdits fils comprend au moins un agent de couplage de type silane, de préférence aminé, permettant d'accrocher la composition sur le verre, au moins un co-agent de couplage polyoléfine (respectivement polypropylène) greffé par au moins un acide ou anhydride d'acide et, de préférence par au moins un anhydride maléique, ayant un rôle complémentaire de celui de l'agent de couplage de type silane et permettant d'améliorer la liaison verre-polyoléfine (respectivement polypropylène), et au moins un agent neutralisant ou stabilisant permettant de neutraliser temporairement et jusqu'au séchage les fonctions de greffage de l'agent de couplage polyoléfine (respectivement polypropylène) ou de stabiliser le mélange de base.

A titre d'exemple, le silane susmentionné peut être un gamma-aminopropyltriéthoxy silane ou un N-bêta(aminoéthyl)gamma-aminopropyltriéthoxy silane et l'agent neutralisant ou stabilisant peut être une base minérale ou organique (soude, potasse, ammoniaque ou-amine primaire, secondaire ou tertiaire, etc...).

La composition d'ensimage selon l'invention comprend, outre le mélange de base, au moins un additif sous forme d'un ester d'acide gras. De préférence, cet additif est un ester d'acide gras alcoxylé et avantageusement il comprend une ou des fonctions hydroxylées. A titre d'exemple, cet additif peut être un ester d'acide gras éthoxylé avec des fonctions hydroxylées.

Le taux d'additif(s) sous forme d'ester(s) d'acide gras dans la composition est généralement de 1 à 15 % en poids et avantageusement de 1 à 10 % en poids par rapport au mélange de base. De préférence, il est de 1 à 8 % en poids et, de façon particulièrement préférée, il est de 1 à 6 % en poids par rapport au mélange de base. Ce ou ces additifs peuvent être ajoutés pendant la préparation du mélange de base ou peuvent être ajoutés plus simplement au mélange de base déjà préparé.

Il convient de noter que l'agent neutralisant (ou stabilisant) mentionné précédemment peut également servir à neutraliser les fonctions alcooliques de l'ester d'acide gras ajouté, notamment pour empêcher la réaction des fonctions alcooliques de l'ester et des fonctions amines du silane lorsque le silane utilisé est un silane aminé. Dans ce cas, lorsque le mélange de base utilisé comprend un agent neutralisant (ou stabilisant), la quantité en poids d'agent neutralisant dans la composition selon l'invention est éventuellement augmentée par rapport à la quantité initiale d'agent neutralisant dans le mélange de base de façon à permettre à la fois la neutralisation recherchée au sein du mélange de base (par exemple la neutralisation de l'agent de couplage polyoléfine dans le mode de réalisation mentionné précédemment) et celle de l'ester d'acide gras.

L'ester d'acide gras peut également être neutralisé par un agent neutralisant (ou stabilisant) différent de celui utilisé le cas échéant dans le mélange de base, cet agent neutralisant supplémentaire étant ajouté lors de la préparation de la composition selon l'invention.

Selon des modes de réalisation préférés de la présente invention, dans lesquels les fils composites comprennent des filaments polypropylène (et plus généralement polyoléfine) et/ou dans lesquels les fils composites sont destinés à renforcer une matière polypropylène- (respectivement polyoléfine), la composition selon l'invention revêtant lesdits fils comprend un mélange de base constitué de 0,05 à 3 % en poids et, avantageusement, de 0,1 à 1,5 % en poids d'agent de couplage de type silane, de 1 à 10 % en poids d'agent de couplage polypropylène (respectivement polyoléfine) greffé par au moins un acide ou anhydride et de 0,1 à 5 % et, avantageusement, de 0,2 à 1,5 % en poids d'agent neutralisant ou stabilisant, la composition comprenant, en plus de ce mélange de base, un ester d'acide gras ajouté à des taux de 1 à 10 % et, avantageusement, de 1 à 6 % en poids par rapport au mélange de base et, éventuellement, un agent neutralisant supplémentaire identique ou non à celui déjà présent dans le mélange de base et en quantité suffisante pour neutraliser l'ester d'acide gras.

Les fils composites selon l'invention sont obtenus notamment selon le procédé suivant : on étire des filets de verre fondu sous la forme de nappes de filaments continus à partir des orifices d'une ou plusieurs filières et l'on revêt les filaments de la composition d'ensimage selon l'invention (c'est-à-dire de la composition comprenant un mélange de base auquel a été ajouté un ester d'acide gras) à l'aide d'un ou plusieurs dispositifs enducteurs tels que des rouleaux ensimeurs, alors que simultanément on extrude et on entraîne une matière organique thermoplastique, les trajets suivis par les filaments de verre et les filaments thermoplastiques convergeant l'un vers l'autre avant que lesdits filaments soient rassemblés en un fil composite entraîné mécaniquement.

Les fils composites selon l'invention peuvent également être obtenus selon l'un quelconque des procédés décrits dans les brevets EP-A-0 367 661, EP-A-0 505 275, EP-A-0 505 274, WO 93/15893, EP-A-0 599 695 et EP-A-0 616 055.

Par extension, on désigne par « fils composites revêtus d'une composition d'ensimage »... des « fils composés de filaments organiques et de filaments de verre qui ont été revêtus d'une composition d'ensimage »...., c'est-à-dire non seulement les fils revêtus de la composition obtenus après rassemblement des filaments organiques et des filaments de verre ensimés mais également ces mêmes fils après séchage et/ou après d'autres traitements visant à éliminer certains composants de la composition (notamment l'eau) et/ou à polymériser certains composants de la composition.

Les fils composites selon l'invention peuvent être collectés sous forme de fils continus ou de rubans, peuvent être coupés soit directement sous filière par un organe servant à les entraîner mécaniquement, soit ultérieurement à partir des enroulements de fils continus obtenus etc... Ainsi, la présentation des fils composites varie selon leur destination.

La quantité d'ensimage déposée sur les fils composites selon l'invention est de l'ordre de 0,2 à 5 % en poids et, de préférence, de 0,2 à 3 % en poids par rapport aux fils. Ces fils font l'objet d'un séchage avant toute association avec une matière organique à renforcer.

Comme indiqué précédemment, les fils composites selon l'invention sont particulièrement aptes au tissage ainsi qu'à la réalisation de composites, en association ou non avec une matière organique supplémentaire. Les composites peuvent notamment être obtenus en alimentant une extrudeuse à l'aide des fils composites selon l'invention comme décrit dans la demande de brevet EP-A-0 541 441.

La composition d'ensimage pour fils composites et les fils composites selon l'invention seront mieux appréciés au travers des exemples suivants illustrés par les figures telles que :
- la figure 1a représente une photographie au microscope électronique d'une section d'un fil composite traditionnel et la figure 1b représente un schéma légèrement simplifié de ladite photographie,
- la figure 2a représente une photographie au microscope électronique d'une section d'un fil composite selon l'invention et la figure 2b représente un schéma légèrement simplifié de ladite photographie.

### EXEMPLE DE RÉFÉRENCE

800 filaments de verre de 17 *µ*m de diamètre obtenus par étirage du verre E fondu à partir d'une filière, revêtus à l'aide d'un rouleau ensimeur en graphite d'une composition d'ensimage ordinairement utilisée pour les fils composites constitués de filaments de polypropylène et de filaments de verre, sont associés à 800 filaments de polypropylène de 23 µm de diamètre, ces deux types de filaments- étant réunis en un fil (ou « mèche ») qui est bobiné sous la forme d'un enroulement à flancs droits.

Les filaments de polypropylène sont formés par extrusion d'un produit, commercialisé sous la référence « VM 6100 K » par la société SHELL, auquel a été ajouté un agent de couplage, commercialisé sous la référence « Polybond 3002 » par la société UNIROYAL CHEMICAL, à raison de 4 % en poids par rapport au polypropylène.

La composition d'ensimage déposée sur les filaments de verre comprend environ 1 % en poids d'un silane aminé, environ 0,5 % en poids d'un agent neutralisant du type amine, environ 13 % en poids d'une émulsion de polypropylène greffé par un anhydride maléique, cette émulsion comprenant environ 55 % d'eau. La quantité totale d'eau dans cet ensimage est d'environ 93 %.

Sur les filaments, verre ou polypropylène, constituant le fil composite, l'angle de contact avec l'ensimage utilisé est mesuré sur monofilament avec une balance de Khan. Les résultats sont rapportés dans le tableau I en annexe.

Des tests de frottement sont également réalisés sur le fil mixte obtenu en faisant passer le fil sur 3 barreaux en acier de 8 mm de diamètre, à une vitesse de 100 m/min et sous tension d'entrée F₁ de l'ordre de 120 cN. La tension de sortie F₂ du fil est mesurée et le coefficient de frottement µ déterminé d'après la formule : F₂ = F₁ e^{(µα)}, α étant la somme des angles de contact du fil sur les barreaux (ici de l'ordre de 370°). Les résultats sont rapportés dans le tableau Il en annexe.

Un test Rotschild sur voltmètre électrostatique Rotschild R 4021 est également réalisé sur le fil à 60 % d'humidité relative et à 20°C pour évaluer l'aptitude du fil à se charger d'électricité statique. Le fil est chargé entre 2 électrodes (150 V) et les temps de demi décharge mesurés sont rapportés dans le tableau II en annexe.

Les caractéristiques mécaniques des composites obtenus par injection-moulage de granulés fibres longues 12 mm réalisés à partir du fil mixte précédemment obtenu, sont également mesurées. Les contraintes à rupture en traction, flexion, les résistances aux chocs Charpy non entaillé et Izod entaillé sont mesurées dans les conditions définies respectivement par les normes ISO R 527, ISO R 178, ISO R 179 et ISO R 180 et sont rapportées dans le tableau III en annexe.

Le fil composite obtenu est par ailleurs passé dans une buse de gainage de façon à maintenir le fil en vue de sa coupe puis le fil gainé est trempé dans une résine thermodurcissable, tiré sous vide pour éliminer les bulles avant des opérations de coupe et polissage en vue de prendre une photographie au microscope électronique de la section du fil.

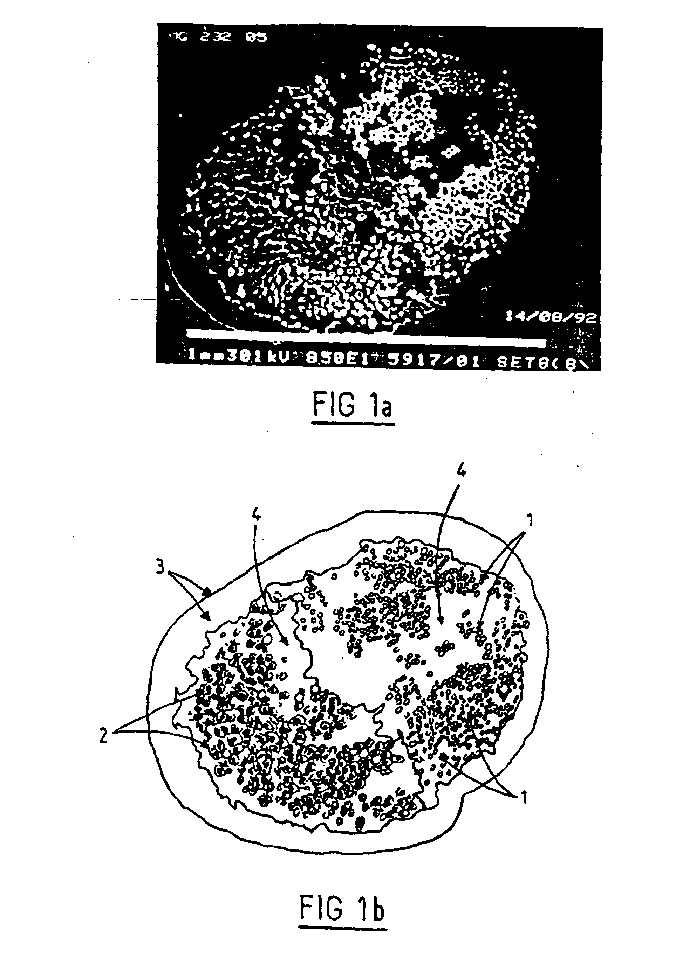

La figure 1a illustrant la photographie obtenue montre la répartition des différents filaments au sein du fil composite dans le présent exemple. Selon la figure 1b, constituant un schéma simplifié de la coupe présentée en figure la et portant les références (la figure 1a ne portant pas les références par souci de clarté), le fil composite comprend des filaments de verre 1 et des filaments de polypropylène 2, le fil étant entouré d'une gaine 3 et présentant, en certains endroits, des traces d'une résine d'imprégnation thermodurcissable 4 (la gaine et la résine ayant servi uniquement aux besoins de la photographie). D'après la photographie et sa représentation, on observe une ségrégation importante des filaments thermoplastiques au sein du fil composite de référence.

### EXEMPLE 1

On opère de la même manière que dans l'exemple de référence en ajoutant à la composition d'ensimage 3 % en poids d'un ester d'acide gras éthoxylé avec des groupements hydroxyles, ce produit étant commercialisé sous la référence « Ensital PRF 416 » par la société SIDOBRE SINOVA.

Les résultats des différents tests sont rapportés respectivement dans les tableaux I, II et III en annexe.

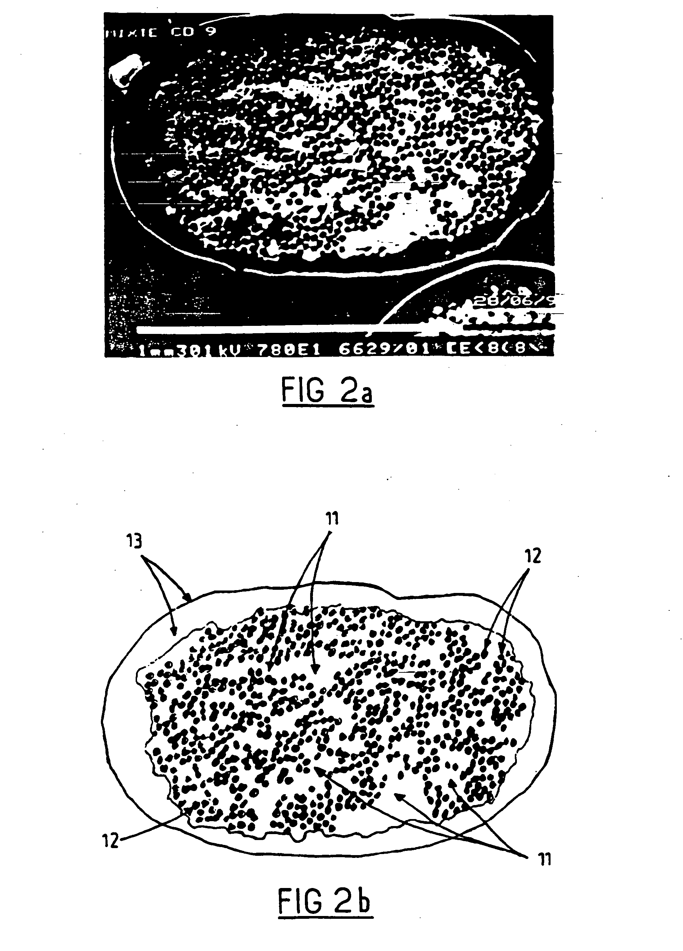

La figure 2a illustre la photographie, effectuée comme dans l'exemple de référence, de la section du fil obtenu. On observe un mélange assez homogène (mélange « intime ») entre les filaments de verre 11 (correspondant aux parties blanches sur les figures 2a et 2b) et les filaments thermoplastiques 12 (points noirs) à l'intérieur du fil. Ce fil est entouré d'une gaine 13 pour les besoins de la photographie, comme dans l'exemple de référence.

### EXEMPLE 2

On opère de la même manière que dans l'exemple 1 en rajoutant à la composition d'ensimage 6 % en poids d'Ensital PRF 416.

Les résultats des différents tests sont rapportés dans les tableaux II et III en annexe.

On observe, d'après le tableau I, que la composition d'ensimage traditionnelle utilisée dans l'exemple de référence mouille très bien le verre et très mal le polypropylène. Elle a alors tendance à rester sur les filaments de verre. Les compositions d'ensimage selon l'invention utilisées dans les exemples 1 et 2 mouillent, quant à elles, très bien le verre et très bien le polypropylène. Il y a alors transfert d'une partie de la composition déposée sur les filaments de verre sur les filaments de polypropylène. Ce transfert a lieu par contact entre filaments de verre et filaments de polypropylène.

On observe également, d'après le tableau 11, que l'utilisation d'une composition d'ensimage selon l'invention entraîne un abaissement du coefficient de frottement, fonction de la concentration en ester d'acide gras éthoxylé de la composition. De plus, lorsque le fil selon l'exemple de référence est utilisé comme fil de chaîne sur un métier à tisser pour fabriquer un tissu, des dépôts de bourre se forment et s'accumulent sur les lisses du métier et entraînent l'arrêt du métier à tisser tous les 20 à 50 mètres de fil tissé. A l'opposé, les fils selon les exemples 1 et 2 ne donnent lieu à aucun dépôt et une chaîne entière de plusieurs milliers à dizaines de milliers de mètres de ces fils peut être utilisée sans arrêt du métier à tisser.

On constate également une réduction très importante de l'aptitude à se charger d'électricité statique pour les fils selon les exemples 1 et 2, par rapport au fil selon l'exemple de référence.

On observe enfin que les propriétés mécaniques des composites obtenus à partir des fils selon les exemples 1 et 2 sont aussi bonnes que les propriétés mécaniques des composites obtenus à partir des fils selon l'exemple de référence. La même constatation peut être faite quelle que soit la méthode de réalisation des composites à partir des fils composites ; ainsi pour des composites réalisés à partir de plaques de tissus de fils composites, les propriétés mécaniques des composites réalisés à partir des fils selon l'invention sont au moins aussi bonnes que les propriétés mécaniques des composites réalisés à partir des fils composites traditionnels.

La composition d'ensimage selon l'invention est adaptée à tout type de fil composite : verre/polyamide, verre/polyester... et les fils composites revêtus d'ensimage selon l'invention peuvent servir à des applications textiles ou peuvent être utilisés directement pour réaliser des composites par moulage, injection, etc...

**TABLEAU I**

| | Exemple de référence | | Exemple 1 | |
|---|---|---|---|---|
| | Filaments de verre | Filaments de polypropylène | Filaments de verre | Filaments de polypropylène |
| Angle de contact | 0° | 45° | 14° | 20° |

**TABLEAU II**

| | Coefficient de frottement | Temps de demi décharge (s) |
|---|---|---|
| Exemple de référence | 0,44 | 40 à 60 |
| Exemple 1 | 0,36 | 9 |
| Exemple 2 | 0,34 | 9 |

**TABLEAU lll**

| | Contrainte à rupture en traction (MPa) | Contrainte à rupture en flexion (MPa) | Choc Charpy non entaillé (kJ/m²) | Choc Izod entaillé (J/m) |
|---|---|---|---|---|
| Ex. de référence | 139,3 | 214 | 71 | 66 |
| Exemple 1 | 138 | 210 | 73 | 70 |
| Exemple 2 | 137 | 215,5 | 70,5 | 63 |

## Revendications

1. Fil composite comprenant des filaments de verre et des filaments thermoplastiques, **caractérisé en ce qu'**il est revêtu d'une composition d'ensimage comprenant un mélange de base comprenant au moins un agent de couplage, et au moins un additif sous forme d'un ester d'acide gras.

2. Fil composite selon la revendication 1, **caractérisé en ce que** le taux d'additif(s) sous forme d'ester(s) d'acide gras dans la composition d'ensimage est compris entre 1 et 15% en poids par rapport au mélange de base.

3. Fil composite selon l'une des revendications 1 ou 2, **caractérisé en ce que** le mélange de base de la composition d'ensimage comprend au moins une polyoléfine.

4. Fil composite selon la revendication 3, **caractérisé en ce que** le mélange de base de la composition d'ensimage comprend au moins un polypropylène greffé par au moins un acide ou anhydride.

5. Fil composite selon l'une des revendications 1 à 4, **caractérisé en ce que** le mélange de base de la composition d'ensimage comprend au moins un agent neutralisant ou stabilisant.

6. Fil composite selon l'une des revendications 1 à 5, **caractérisé en ce que** l'ester d'acide gras est un ester d'acide gras alcoxylé comprenant une ou des fonctions hydroxytées.

7. Fil composite selon l'une des revendications 1 à 6, **caractérisé en ce qu'**il présente une perte au feu comprise entre 0,2 et 5% en poids.

8. Composition d'ensimage pour fil composite comprenant un mélange de base sous forme d'une solution aqueuse, d'une émulsion aqueuse ou d'une suspension aqueuse comprenant au moins 85% en poids d'eau et au moins un agent de couplage, et au moins un additif sous forme d'un ester d'acide gras.

9. Composite à base de matière(s) organique(s) et de verre, **caractérisé en ce qu'**il comprend au moins en partie des fils composites selon l'une des revendications 1 à 7.

## Claims

1. Composite yarn comprising glass filaments and thermoplastic filaments, **characterized in that** it is coated with a sizing composition comprising a base mixture comprising at least one coupling agent and at least one additive in the form of a fatty acid ester.

2. Composite yarn according to Claim 1, **characterized in that** the amount of additive(s) in the form of fatty acid ester(s) in the sizing composition is between 1 and 15 % by weight with respect to the base mixture.

3. Composite yarn according to either of Claims 1 or 2, **characterized in that** the base mixture of the sizing composition comprises at least one polyolefine.

4. Composite yarn according to Claim 3, **characterized in that** the base mixture of the sizing composition comprises at least one polypropylene grafted by at least one acid or acid anhydride.

5. Composite yarn according to one of Claims 1 to 4, **characterized in that** the base mixture of the sizing composition comprises at least one neutralizing agent or stabilizer.

6. Composite yarn according to one of Claims 1 to 5, **characterized in that** the fatty acid ester is an alkoxylated fatty acid ester comprising one or more hydroxyl functional groups.

7. Composite yarn according to one of Claims 1 to 6, **characterized in that** it has a loss on ignition of between 0.2 and 5 % by weight.

8. Sizing composition for composite yarn, comprising a base mixture in the form of an aqueous solution, an aqueous emulsion or an aqueous suspension comprising at least 85 % by weight of water and at least one coupling agent, and at least one additive in the form of a fatty acid ester.

9. Composite based on organic material(s) and on glass, **characterized in that** it comprises, at least in part, composite yarns according to one of Claims 1 to 7.

## Patentansprüche

1. Verbundfaden, der Glasfilamente und Thermoplastfilamente umfasst, **dadurch gekennzeichnet, dass** er mit einer Schlichtezusammensetzung überzogen ist, die ein Grundgemisch umfasst, das mindestens ein Haftmittel und mindestens ein Additiv in Form eines Fettsäureesters enthält.

2. Verbundfaden nach Anspruch 1, **dadurch gekennzeichnet, dass** der Anteil an Additiv(en) in Form von Fettsäureester(n) an der Schlichtezusammensetzung 1 bis 15 Gew.-%, bezogen auf das Grundgemisch, beträgt.

3. Verbundfaden nach Anspruch 1 oder 2, **dadurch gekennzeichnet, dass** das Grundgemisch der Schlichtezusammensetzung mindestens ein Polyolefin enthält.

4. Verbundfaden nach Anspruch 3, **dadurch gekennzeichnet, dass** das Grundgemisch der Schlichtezusammensetzung mindestens ein Polypropylen, das mit mindestens einer Säure oder einem Anhydrid gepfropft ist, enthält.

5. Verbundfaden nach einem der Ansprüche 1 bis 4, **dadurch gekennzeichnet, dass** das Grundgemisch der Schlichtezusammensetzung mindestens ein neutralisierendes oder stabilisierendes Mittel enthält.

6. Verbundfaden nach einem der Ansprüche 1 bis 5, **dadurch gekennzeichnet, dass** der Fettsäureester ein eine oder mehrere Hydroxylfunktionen enthaltender alkoxylierter Fettsäureester ist.

7. Verbundfaden nach einem der Ansprüche 1 bis 6, **dadurch gekennzeichnet, dass** sein Glühverlust 0,2 bis 5 Gew.-% beträgt.

8. Schlichtezusammensetzung für einen Verbundfaden, die ein Grundgemisch in Form einer wässrigen Lösung, einer wässrigen Emulsion oder einer wässrigen Suspension umfasst, die mindestens 85 Gew.-% Wasser, mindestens ein Haftmittel und mindestens ein Additiv in Form eines Fettsäureesters enthält.

9. Verbundmaterial auf der Basis von organischem (organischen) Material(ien) und Glas, **dadurch gekennzeichnet, dass** es wenigstens teilweise Verbundfäden nach einem der Ansprüche 1 bis 7 enthält.
